# EUROPEAN PATENT APPLICATION

(11) **EP 2 495 797 A1**
(43) Date of publication of application: **05.09.2012**
(21) Application number: 10826737.8
(22) Date of filing: 26.10.2010
(51) Int. Cl.: H01M 10/0569, H01M 10/052, H01M 10/0567, H01M 10/0568

(54) **NONAQUEOUS ELECTROLYTE SOLUTION FOR SECONDARY BATTERY, AND SECONDARY BATTERY**

(30) Priority: 27.10.2009 JP 2009246969
(71) Applicant: Asahi Glass Company, Limited, Tokyo 100-8405 (JP)
(72) Inventor: IWAYA, Masao, Tokyo 100-8405 (JP); ONOZAKI, Yu, Tokyo 100-8405 (JP)
(74) Representative: Müller-Boré & Partner Patentanwälte
(86) International application number: PCT/JP2010/068997
(87) International publication number: WO 2011/052605

(57) **Abstract**

To provide a non-aqueous electrolyte solution for secondary batteries which has excellent compatibility even in a state where a lithium salt is dissolved therein and further has excellent nonflammability and cycle properties, and a secondary battery having such a non-aqueous electrolyte solution for secondary batteries.

A non-aqueous electrolyte solution for secondary batteries, which comprise a lithium salt, a specific hydrofluoromonoether and a specific hydrofluoropolyether, and a secondary battery containing such a non-aqueous electrolyte solution for secondary batteries.

## Description

### TECHNICAL FIELD

The present invention relates to a non-aqueous electrolyte solution for secondary batteries and a secondary battery.

### BACKGROUND ART

As a solvent of a non-aqueous electrolyte solution for secondary batteries, a carbonate type compound, which is excellent in solubility of a lithium salt, exhibits a high lithium ion conductivity and has a wide potential window, has been widely used. However, a carbonate type compound usually has a low flash point and may be flammable at the time of e.g. runaway of a battery. Thus, a hydrofluoroether having no flash point is used in combination. When a non-aqueous electrolyte solution containing a hydrofluoroether is used, the hydrofluoroether having a low boiling point and no flash point is filled in the vapor phase, whereby excellent nonflammability is achieved by so-called choking effect.

As a non-aqueous electrolyte solution containing a hydrofluoroether, a non-aqueous electrolyte solution (hereinafter referred to as "non-aqueous electrolyte solution (i)") containing a fluorinated monoether such as C₆F₁₃OCH₃ and a fluorinated polyether such as C₃F₇O₂HF₃OC₂H₄OC₂HF₃OC₃F₇ is known (Patent Document 1). The fluorinated polyether has a plurality of oxygen atoms which strongly interact with lithium ions, whereby the solubility of lithium ions may be improved.

### PRIOR ART DOCUMENTS

### PATENT DOCUMENT

Patent Document 1: JP 2006-216361 A

### DISCLOSURE OF INVENTION

### TECHNICAL PROBLEM

However, in the non-aqueous electrolyte solution (i), the compatibility between the fluorinated monoether and the fluorinated polyether is low, and thus when they are used in combination, the electrolyte solution may be separated into two phases at the time of dissolution of a lithium salt. Then the present inventors attempted to improve the compatibility in the non-aqueous electrolyte solution (i) by decreasing the number of fluorine atoms of the fluorinated polyether. However, by such a method, sometimes sufficient cycle properties of the electrolyte were not obtained although the compatibility was improved.

The present invention is to provide a non-aqueous electrolyte solution for secondary batteries which has excellent compatibility even in a state where a lithium salt is dissolved therein and further has excellent nonflammability and cycle properties, and a secondary battery having such a non-aqueous electrolyte solution for secondary batteries.

### SOLUTION TO PROBLEM

In order to solve the above problem, the present invention provides the following.
[1] A non-aqueous electrolyte solution for secondary batteries, which comprises a lithium salt, at least one hydrofluoroether selected from the group consisting of a compound represented by the following formula (1) and a compound represented by the following formula (2), and at least one compound (3) which is a compound represented by the following formula (3H) wherein at least one hydrogen atom is substituted by a fluorine atom:

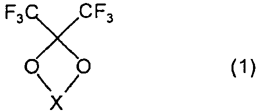

   R¹-O-R² (2)

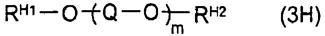

   wherein each of R¹ and R² which are independent of each other, is a C₁₋₁₀ alkyl group or a partially fluorinated C₁₋₁₀ alkyl group, provided that at least one of R¹ and R² is a partially fluorinated alkyl group; X is a C₁₋₅ alkylene group, a partially fluorinated C₁₋₅ alkylene group, a C₁₋₅ alkylene group having an ethereal oxygen atom between carbon-carbon atoms, or a partially fluorinated C₁₋₅ alkylene group having an ethereal oxygen atom between carbon-carbon atoms; m is an integer of from 1 to 10; Q is a C₁₋₄ linear alkylene group, a C₁₋₄ linear alkylene group having at least one hydrogen atom substituted by a C₁₋₅ alkyl group, or a C₁₋₄ alkylene group having at least one hydrogen atom substituted by a C₁₋₅ alkylene group having an ethereal oxygen atom between carbon-carbon atoms, provided that when m is 2 or more, m Qs may be the same groups or groups different from one another; and each of R^{H1} and R^{H2} which are independent of each other, is a C₁₋₅ linear alkyl group, or R^{H1} and R^{H2} are linked to each other to form a C₁₋₁₀ linear alkylene group.
[2] The non-aqueous electrolyte solution for secondary batteries according to the above [1], wherein the hydrofluoroether is at least one member selected from the group consisting of a compound represented by the following formula (1-1), CF₃CH₂OCF₂CF₂H, CHF₂CF₂CH₂0CF₂CF₂H, CHF₂CF₂CH(CH₃)OCF₂CF₂H, CF₃CF₂CH₂OCF₂CHF₂ and CF₃CH₂OCF₂CHFCF₃: 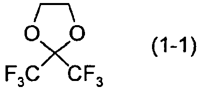
[3] The non-aqueous electrolyte solution for secondary batteries according to the above [1] or [2], wherein the lithium salt is at least one member selected from the group consisting of LiPF₆, a compound represented by the following formula (4), FSO₂N(Li)SO₂F, CF₃SO₂N(Li)SO₂CF₃, CF₃CF₂SO₂N(Li)SO₂CF₂CF₃, LiClO₄, a compound represented by the following formula (5), a compound represented by the following formula (6) and LiBF₄: 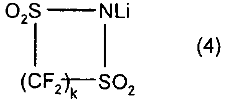 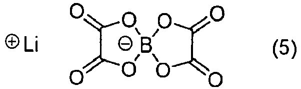 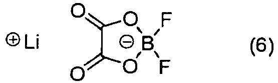 wherein k is an integer of from 1 to 5.
[4] The non-aqueous electrolyte solution for secondary batteries according to the above [3], wherein the compound represented by the formula (4) is a compound wherein in the formula (4), k is 2.
[5] The non-aqueous electrolyte solution for secondary batteries according to any one of the above [1] to [4], wherein Q in the compound represented by the formula (3H) is -CH₂CH₂-, and at least one of R^{H1} and R^{H2} is CH₃CH₂- or CH₃CH₂CH₂-.
[6] The non-aqueous electrolyte solution for secondary batteries according to any one of the above [1] to [5], wherein m in the compound represented by the formula (3H) is from 1 to 6.
[7] The non-aqueous electrolyte solution for secondary batteries according to any one of the above [1] to [6], wherein the content of the compound (3) is, by mole, from 0.2 to 6.0 times the total amount of the lithium salt.
[8] The non-aqueous electrolyte solution for secondary batteries according to any one of the above [1] to [7], which contains a carbonate type solvent.
[9] The non-aqueous electrolyte solution for secondary batteries according to the above [8], wherein the carbonate type solvent is at least one compound selected from the group consisting of a compound represented by the following formula (7-1), a compound represented by the following formula (7-2) and a compound represented by the following formula (7-3): 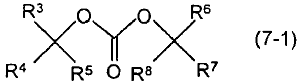 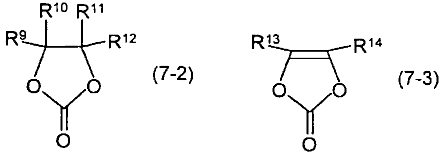 wherein each of R³ to R¹⁴ which are independent of one another, is a hydrogen atom, a halogen atom, an alkyl group or a fluorinated alkyl group.
[10] The non-aqueous electrolyte solution for secondary batteries according to the above [8] or [9], wherein the content of the carbonate type solvent is from 0.1 to 0.45 vol% based on the total amount 100 vol% of solvents in the electrolyte solution.
[11] The non-aqueous electrolyte solution for secondary batteries according to any one of the above [1] to [10], which has a conductivity of at least 0.20 S m⁻¹ at 25°C.
[12] A secondary battery comprising a negative electrode composed of a material capable of electrochemically absorbing/desorbing lithium ions, and metal lithium or a lithium alloy; a positive electrode composed of a material capable of electrochemically absorbing/desorbing lithium ions; and the non-aqueous electrolyte solution for secondary batteries as defined in any one of the above [1] to [11].
[13] The secondary battery according to the above [12], which is used with a potential of the positive electrode (a potential based on lithium metal) of at least 3.4 V.

### ADVANTAGEOUS EFFECTS OF INVENTION

The non-aqueous electrolyte solution for secondary batteries of the present invention has excellent compatibility even in a state where a lithium salt is dissolved in the electrolyte solution and further has excellent nonflammability and cycle properties.

Further, the secondary battery of the present invention is a secondary battery having the non-electrolyte solution of the present invention, which has excellent nonflammability and cycle properties.

### DESCRIPTION OF EMBODIMENTS

In this description, a compound represented by formula (1), for example, will be hereinafter referred to as compound (1), and the same applies to compounds represented by other numbers.

### [Non-aqueous electrolyte solution for secondary batteries]

The non-aqueous electrolyte solution for secondary batteries of the present invention (hereinafter referred to simply as "the non-aqueous electrolyte solution") is a non-aqueous electrolyte solution comprising a lithium salt, at least one hydrofluoroether selected from the group consisting of a compound (1) and a compound (2), and at least one compound (3) which is a compound (3H) wherein at least one hydrogen atom is substituted by a fluorine atom.

A non-aqueous electrolyte solution means an electrolyte solution using a solvent containing substantially no water, and it is an electrolyte solution such that even if it contains water, the amount of water is within a range where performance degradation of a secondary battery using the non-aqueous electrolyte solution is not observed. The amount of water contained in the non-aqueous electrolyte solution of the present invention is preferably at most 500 mass ppm, more preferably at most 100 mass ppm, particularly preferably at most 50 mass ppm, based on the total mass of the electrolyte solution. The lower limit of the amount of water is 0 mass ppm.

### (Lithium salt)

The lithium salt in the present invention is an electrolyte which is dissociated in the non-aqueous electrolyte solution to supply lithium ions. The lithium salt may, for example, be at least one member selected from the group consisting of LiPF₆, the following compound (4), FSO₂N(Li)SO₂F, CF₃SO₂N(Li)SO₂CF₃, CF₃CF₂SO₂N(Li)SO₂CF₂CF₃, LiClO₄, the following compound (5), the following compound (6), and LiBF₄. The lithium salt is preferably at least one member selected from the group consisting of LiPF₆, LiBF₄ and the compound (4). That is, it is preferred to use LiPF₆ alone, one or more of the compounds (4), LiPF₆ and the compound (4) in combination, LiPF₆ and LiBF₄ in combination, LiBF₄ and compound (4) in combination, or LiPF₆, LiBF₄ and the compound (4) in combination.

Further, other examples of a combination of the lithium salts include a combination of LiPF₆ and FSO₂N(Li)SO₂F, a combination of LiPF₆ and CF₃SO₂N(Li)SO₂CF₃, a combination of LiPF₆ and CF₃CF₂SO₂N(Li)SO₂CF₂CF₃, a combination of LiPF₆ and the compound (5), a combination of LiPF₆ and the compound (6), a combination of LiPF₆ and LiClO₄, a combination of LiPF₆, the compound (4) and FSO₂N(Li)SO₂F, a combination of LiBF₄ and FSO₂N(Li)SO₂F, a combination of LiBF₄ and CF₃SO₂N(Li)SO₂CF₃, a combination of LiBF₄ and CF₃CF₂SO₂N(Li)SO₂CF₂CF₃, a combination of LiBF₄ and the compound (5), a combination of LiBF₄ and the compound (6), a combination of LiBF₂ and LiClO₄, a combination of the compound (4) and FSO₂N(Li)SO₂F, a combination of the compound (4) and CF₃SO₂N(Li)SO₂CF₃, a combination of the compound (4) and CF₃CF₂SO₂N(Li)SO₂CF₂CF₃, a combination of the compound (4) and the compound (5), a combination of the compound (4) and the compound (6), a combination of the compound (4) and LiClO₄, a combination of LiPF₆, LiBF₄ and FSO₂N(Li)SO₂F, a combination of LiPF₆, LiBF₄ and CF₃SO₂N(Li)SO₂CF₃, a combination of LiPF₆, LiBF₄ and CF₃CF₂SO₂N(Li)SO₂CF₂CF₃, a combination of LiPF₆, LiBF₄ and the compound (5), a combination of LiPF₆, LiBF₄ and the compound (6), a combination of LiPF₆, LiBF₄ and LiCIO, a combination of LiPF₆, the compound (4) and FS0₂N(Li)SO₂F, a combination of LiPF₆, the compound (4) and CF₃SO₂N(Li)SO₂CF₃, a combination of LiPF₆, the compound (4) and CF₃CF₂SO₂N(Li)SO₂CF₂CF₃, a combination of LiPF₆, the compound (4) and the compound (5), a combination of Lip6, the compound (4) and the compound (6), and a combination of LiPF₆, the compound (4) and LiCI0₄: 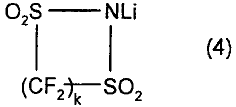 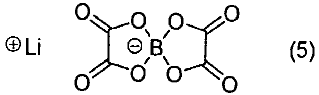 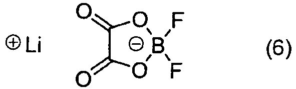 wherein k in the compound (4) is an integer of from 1 to 5.

Examples of the compound (4) include the following compounds (4-1) to (4-5). Among them, the compound (4-2) wherein k is 2 is preferred from the viewpoint that a non-aqueous electrolyte solution having a high conductivity may easily be obtained.

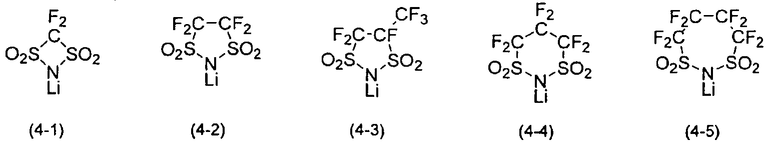

The amount of the lithium salt in the non-aqueous electrolyte solution is preferably from 0.1 to 3.0 mol/L, particularly preferably from 0.5 to 2.0 mol/L. When the amount of the lithium salt is at least 0.1 mol/L, a non-aqueous electrolyte solution having a high conductivity may easily be obtained. Further, when the amount of the lithium salt is at most 3.0 mol/L, the lithium salt may easily be dissolved in the compound (1) and the compound (2).

Further, when both LiPF₆ and the compound (4) are used, the molar ratio (Mb/Ma) of the molar amount (Mb) of the compound (4) to the molar amount (Ma) of LiPF₆ is preferably from 0.01 to 10, more preferably from 0.05 to 2.0.

When the molar ratio (Mb/Ma) is at least 0.01, a high conductivity of the nonflammable non-aqueous electrolyte solution may easily be maintained. Further, when the molar ratio (Mb/Ma) is at most 10, a highly chemically-stable non-aqueous electrolyte solution may easily be obtained.

Further, when both LiPF₆ and LiBF₄ are used, the molar ratio (Mc/Ma) of the molar amount (Mc) of LiBF₄ to the molar amount (Ma) of LiPF₆ is preferably from 0.01 to 10, more preferably from 0.05 to 2.0.

The molar ratio (Mc/Ma) is at least 0.01, a high conductivity of the nonflammable non-aqueous electrolyte solution may easily be maintained. Further, when the molar ratio (Mb/Ma) is at most 10, a highly chemically-stable non-aqueous electrolyte solution may easily be obtained.

Further, when at least one lithium salt A selected from the group consisting of LiPF₆, LiBF₄ and the compound (4), and at least one lithium salt B selected from the group consisting of FSO₂N(Li)SO₂F, CF₃SO₂N(Li)SO₂CF₃, CF₃CF₂SO₂N(Li)SO₂CF₂CF₃, LiClO₄, the compound (5) and the compound (6), are used in combination, the molar ratio (Me/Md) of the total molar amount (Me) of the lithium salt B to the total molar amount (Md) of the lithium salt A is preferably from 0.01 to 10, more preferably from 0.05 to 2.0.

When the molar ratio (Me/Md) is at least 0.01, a high conductivity of the nonflammable non-aqueous electrolyte solution may easily be maintained. Further, the molar ratio (Me/Md) is at most 10, a highly chemically-stable non-aqueous electrolyte solution may easily be obtained.

### (Hydrofluoroether)

The non-aqueous electrolyte solution of the present invention contains at least one hydrofluoroether selected from the group consisting of the following compound (1) and the following compound (2), which hydrofluoroether is a solvent imparting nonflammability to the non-aqueous electrolyte solution of the present invention:

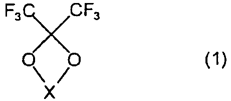

R¹-O-R² (2)

wherein X in the compound (1) is a C₁₋₅ alkylene group, a partially fluorinated C₁₋₅ alkylene group, a C₁₋₅ alkylene group having an ethereal oxygen atom between carbon-carbon atoms, or a partially fluorinated C₁₋₅ alkylene group having an ethereal oxygen atom between carbon-carbon atoms; and each of R¹ and R² in the compound (2) which are independent of each other, is a C₁₋₁₀ alkyl group or a partially fluorinated C₁₋₁₀ alkyl group, provided that at least one of R¹ and R² is a partially fluorinated alkyl group.

The partially fluorinated alkylene group means an alkylene group having some of hydrogen atoms in the alkylene group substituted by fluorine atoms. Further, a partially fluorinated alkyl group means an alkyl group having some of hydrogen atoms in the alkyl group substituted by fluorine atoms. In the partially fluorinated alkyl group, a hydrogen atom is present. The structure of the alkyl group may, for example, be a straight chain structure, a branched structure, a cyclic structure or a group having a partially cyclic structure (such as a cycloalkylalkyl group).

X in the compound (1) has any one of four forms i.e. a C₁₋₅ alkylene group, a partially fluorinated C₁₋₅ alkylene group, a C₁₋₅ alkylene group having an ethereal oxygen atom between carbon-carbon atoms, and a partially fluorinated C₁₋₅ alkylene group having an ethereal oxygen atom between carbon-carbon atoms.

From the viewpoint that the lithium salt may be uniformly dissolved, and a non-aqueous electrolyte solution having excellent nonflammability and a high conductivity may easily be obtained, the compound (1) is preferably such that X in the formula (1) is a C₁₋₅ alkylene group, more preferably one compound selected from the group consisting of compounds wherein X in the formula (1) is -CH₂-, -CH₂CH₂-, -CH(CH₃)CH₂- or -CH₂CH₂CH₂-.

Examples of the compound (1) include the following compounds (1-1) to (1-6). Among them, the compound (1-1) is preferred.

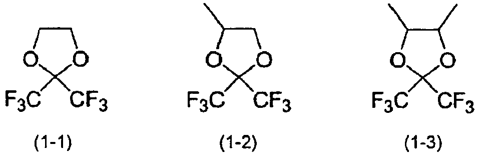

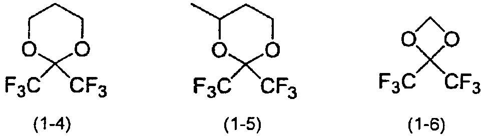

R¹ and R² in the compound (2) may be the same groups, or groups different from each other.

Further, at least one of R¹ and R² is a partially fluorinated alkyl group. Each of R¹ and R² contains at least one hydrogen atom, whereby solubility of the lithium salt in the non-aqueous electrolyte solution will be increased.

The compound (2) is preferably a compound wherein the total number of carbon atoms is from 4 to 10, particularly preferably a compound wherein the total number of carbon atoms is from 4 to 8, because if the number of carbon atoms is too small, the boiling point may be too low, and if the number of carbon atoms is too large, the viscosity may become high. The molecular weight of the compound (2) is preferably from 150 to 800, more preferably from 150 to 500, particularly preferably from 200 to 500. Further, the proportion of the total weight of fluorine atoms to the molecular weight of the compound (2) is preferably at least 50%, particularly preferably at least 60%, because when the fluorine content in the compound (2) is increased, the nonflammability will be improved.

Examples of the compound (2) include the following (2-A1) to (2-A108).

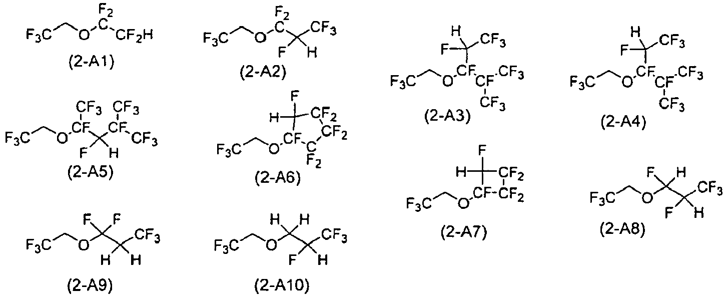

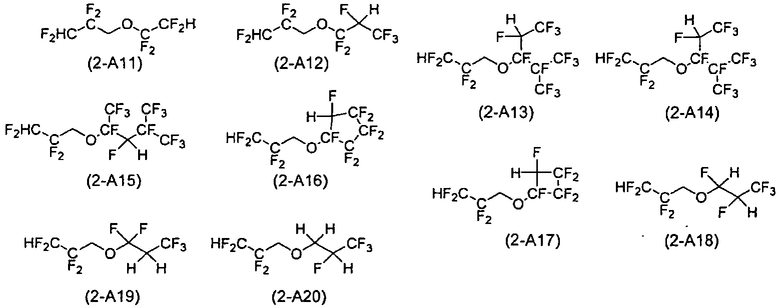

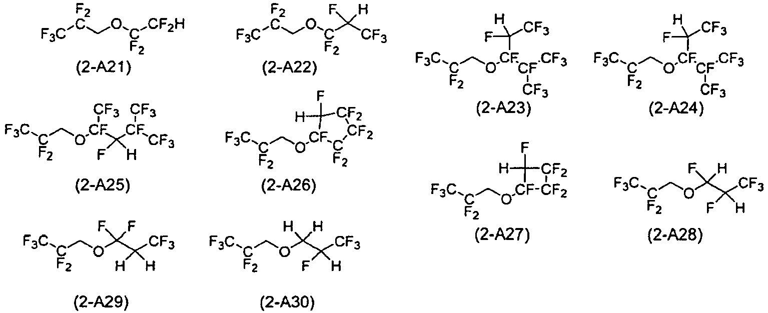

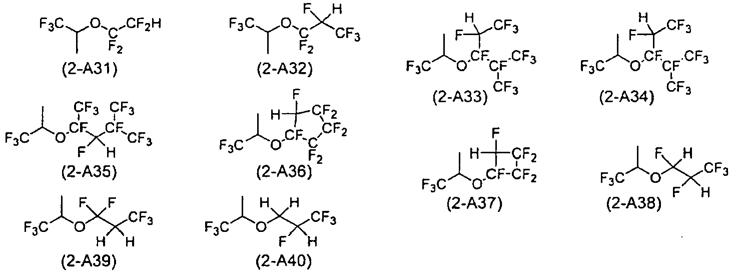

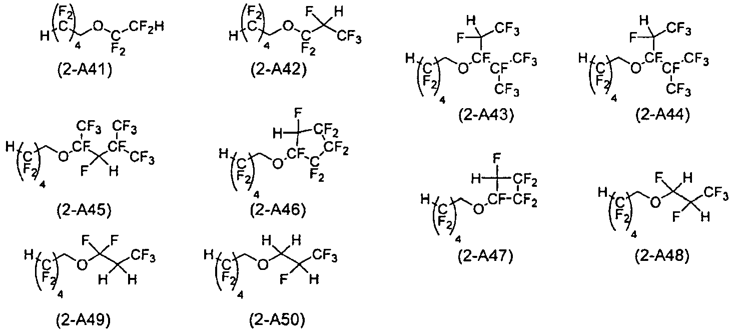

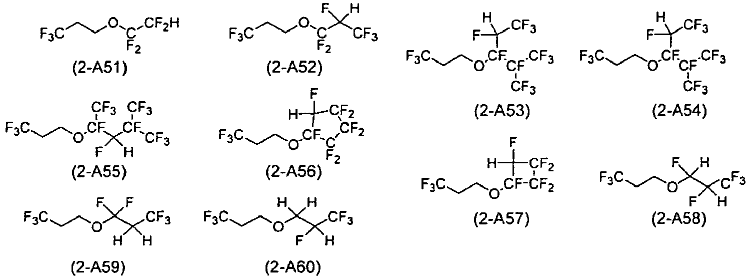

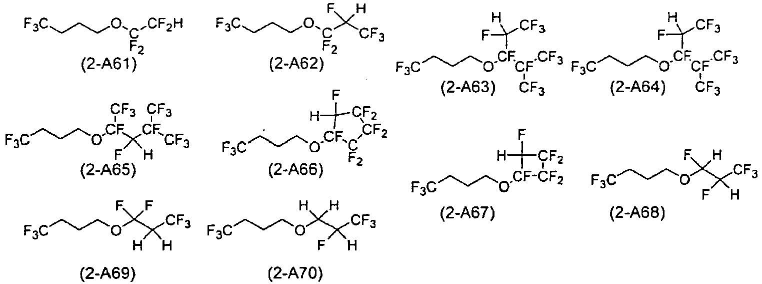

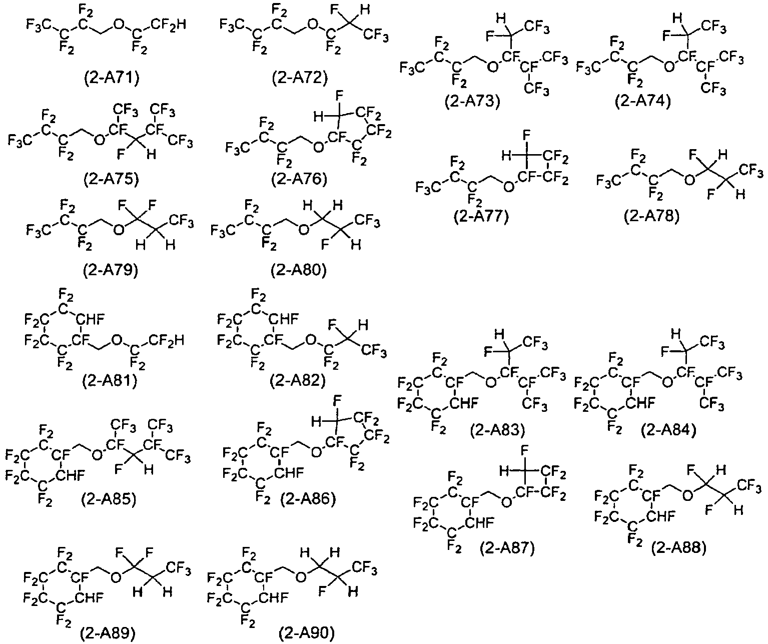

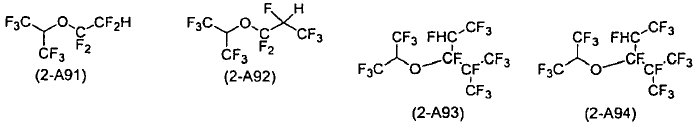

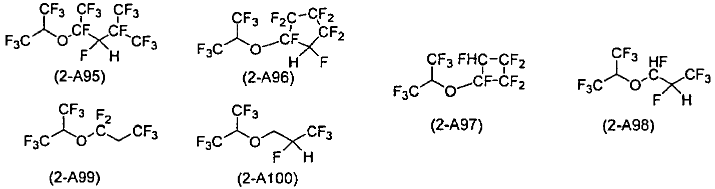

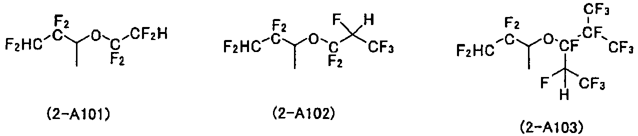

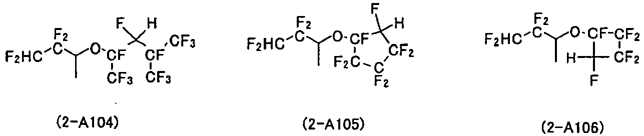

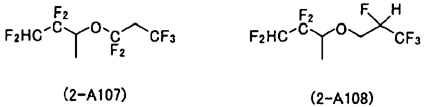

From the viewpoint that the lithium salt may be uniformly dissolved, and a non-aqueous electrolyte solution having excellent nonflammability and a high conductivity may easily be obtained, the compound (2) is preferably CF₃CH₂OCF₂CF₂H (the compound (2-A1))(e.g. tradename: AE-3000, manufactured by Asahi Glass Company, Limited), CHF₂CF₂CH₂OCF₂CF₂H (the compound (2-A11)), CF₃CF₂CH₂OCF₂CF₂H (the compound (2-A21)), CF₃CH₂OCF₂CHFCF₃ (the compound (2-A2)) or CHF₂CF₂CH(CH₃)OCF₂CF₂H (the compound (2-A101), particularly preferably the compound (2-A1).

The hydrofluoroether content i.e. the total content of the compound (1) and the compound (2) in the non-aqueous electrolyte solution of the present invention is preferably from 20 to 95 vol%, particularly preferably from 50 to 90 vol%, based on the total amount 100 vol% of solvents to be used for the non-aqueous electrolyte solution.

Further, when as the hydrofluoroether, the compound (1) (volume: Va) and the compound (2) (volume: Vb) are used in combination, their volume ratio (Vb/Va) is preferably from 0.01 to 100, more preferably from 0.1 to 10.

### (Compound (3))

The compound (3) in the present invention is a solvent which plays a role to uniformly dissolve the lithium salt in the above hydrofluoroether by being efficiently solvated with the lithium salt. It is considered that a part or all of the compound (3) form complexes with the lithium salt in the electrolyte solution.

The compound (3) is a compound represented by the following compound (3H) wherein at least one hydrogen atom is substituted by a fluorine atom: 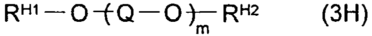 wherein in the compound (3H), m is an integer of from 1 to 10; Q is a C₁₋₄ linear alkylene group, a C₁₋₄ linear alkylene group having at least one hydrogen atom substituted by a C₁₋₅ alkyl group, or a C₁₋₄ alkylene group having at least one hydrogen atom substituted by a C₁₋₅ alkylene group having an ethereal oxygen atom between carbon-carbon atoms, provided that when m is 2 or more, m Qs may be the same groups or groups different from one another; and each of R^{H1} and R^{H2} which are independent of each other, is a C₁₋₅ linear alkyl group, or R^{H1} and R^{H2} are linked to each other to form a C₁₋₁₀ linear alkylene group.

In the compound (3H), m is preferably from 1 to 6, more preferably from 1 to 5, particularly preferably from 1 to 4. Q is preferably a linear alkylene group, particularly preferably -CH₂CH₂-. R^{H1} and R^{H2} is preferably such that at least one of them is a ethyl group or a propyl group, more preferably such that both R^{H1} and R^{H2} are propyl groups, both R^{H1} and R^{H2} are ethyl groups, one of R^{H1} and R^{H2} is an ethyl group and the other is a propyl group, one of R^{H1} and R^{H2} is an ethyl group and the other is a methyl group, or one of R^{H1} and R^{H2} is a propyl group and the other is a methyl group, particularly preferably such that both R^{H1} and R^{H2} are ethyl groups, or one of R^{H1} and R^{H2} is an ethyl group and the other is a methyl group.

The compound (3H) is preferably a compound represented by the following formula (3H-A): 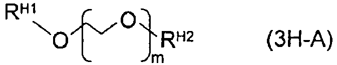 wherein R^{H1}, R^{H2} and m are the same as above, and the preferred modes are also the same as above.

Examples of the compound wherein in the compound (3H-A), both R^{H1} and R^{H2} are ethyl groups, and m is from 1 to 6, include diethylene glycol diethyl ether, triethylene glycol diethyl ether, tetraethylene glycol diethyl ether, pentaethylene glycol diethyl ether and hexaethylene glycol diethyl ether.

Examples of the compound wherein in the compound (3H-A), both R^{H1} and R^{H2} are propyl groups, and m is from 1 to 6, include diethylene glycol di-n-propyl ether, triethylene glycol di-n-propyl ether, tetraethylene glycol di-n-propyl ether, pentaethylene glycol di-n-propyl ether and hexaethylene glycol di-n-propyl ether.

Examples of the compound wherein in the compound (3H-A), one of R^{H1} and R^{H2} is an ethyl group or a propyl group, and m is from 1 to 6, include diethylene glycol ethyl methyl ether, triethylene glycol ethyl methyl ether, tetraethylene glycol ethyl methyl ether, pentaethylene glycol ethyl methyl ether, hexaethylene glycol ethyl methyl ether, diethylene glycol ethyl propyl ether, triethylene glycol ethyl propyl ether, tetraethylene glycol ethyl propyl ether, pentaethylene glycol ethyl propyl ether, hexaethylene glycol ethyl propyl ether, diethylene glycol methyl propyl ether, triethylene glycol methyl propyl ether, tetraethylene glycol methyl propyl ether, pentaethylene glycol methyl propyl ether and hexaethylene glycol methyl propyl ether.

Examples of the compound (3H-A) include other compounds such as 1,2-diemthoxyethane (monoglyme), diglyme, triglyme, tetraglyme, pentaglyme, hexaglyme, diethylene glycol di-iso-propyl ether, diethylene glycol di-n-butyl ether, triethylene glycol di-iso-propyl ether, triethylene glycol di-n-butyl ether, tetraethylene glycol di-iso-propyl ether, tetraethylene glycol di-n-butyl ether, pentaethylene glycol di-iso-propyl ether, pentaethylene glycol di-n-butyl ether, hexaethylene glycol di-iso-propyl ether and hexaethylene glycol di-n-butyl ether.

Examples of the compound (3H) other than the compound (3H-A) include the following compounds wherein each of R^{H1} and R^{H2} is a methyl group, an ethyl group or a propyl group, Q contains a group other than -CH₂CH₂-, and m is from 1 to 6. In the following compounds, Et represents an ethyl group.

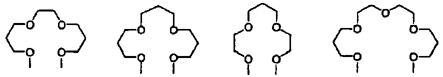

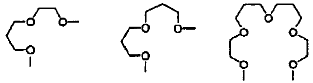

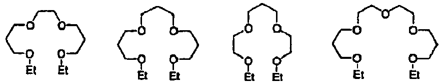

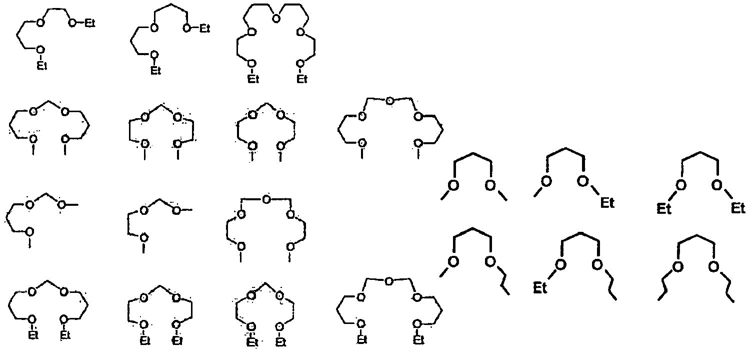

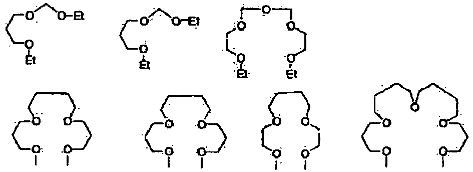

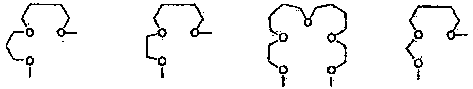

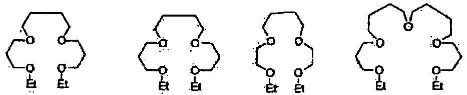

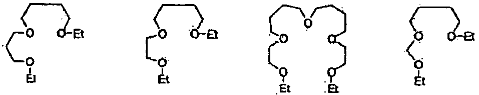

Further, the compound (3H) wherein R^{H1} and R^{H2} are linked to form a C₁₋₁₀ alkylene group may, for example, be 12-crown-4, 14-crown-4, 15-crown-5 or 18-crown-6.

The compound (3H) is preferably diethylene glycol diethyl ether, triethylene glycol diethyl ether, tetraethylene glycol diethyl ether, pentaethylene glycol diethyl ether, hexaethylene glycol diethyl ether, diethylene glycol ethyl methyl ether, triethylene glycol ethyl methyl ether, tetraethylene glycol ethyl methyl ether, pentaethylene glycol ethyl methyl ether or hexaethylene glycol ethyl methyl ether.

Further, from the viewpoint that when the viscosity (20°C) is at most 5 cP, the non-aqueous electrolyte solution has an excellent practical solvent viscosity and the non-aqueous electrolyte solution to be obtained exhibits a good conductivity, it is more preferably diethylene glycol diethyl ether, triethylene glycol diethyl ether, tetraethylene glycol diethyl ether, pentaethylene glycol diethyl ether, diethylene glycol ethyl methyl ether, triethylene glycol ethyl methyl ether, tetraethylene glycol ethyl methyl ether or pentaethylene glycol ethyl methyl ether.

The compound (3H) preferably essentially contains a compound of the above formula (3H) wherein m is from 1 to 6, more preferably consists solely of the compound of the above formula (3H) wherein m is from 1 to 6.

The compound (3) is a compound represented by the compound (3H) wherein at least one hydrogen atom is substituted by a fluorine atom, that is, a compound wherein at least one hydrogen atom in Q, R^{H1} and R^{H2} is substituted by a fluorine atom. The position in the compound (3H) of the hydrogen atom substituted by a fluorine atom is not particularly limited.

The compound (3) may, for example, be a compound wherein at least one hydrogen atom in at least one group of R^{H1} and R^{H2} in the compound (3H) is substituted by a fluorine atom, a compound wherein at least one hydrogen atom in the group represented by Q in the compound (3H) is substituted by a fluorine atom, or a compound wherein at least one hydrogen atom in each of at least one group of R^{H1} and R^{H2}, and the group represented by Q, is substituted by a fluorine atom.

One of such compounds (3) may be used alone, or two or more of them may be used in combination.

Specific examples of the compound (3) include the following compounds.

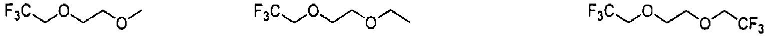

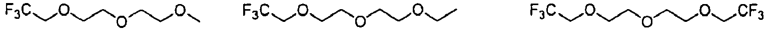

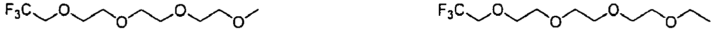

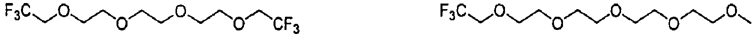

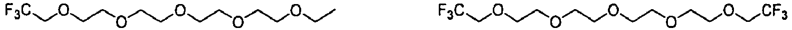

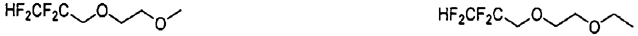

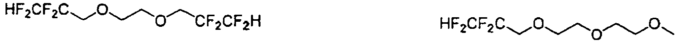

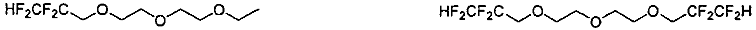

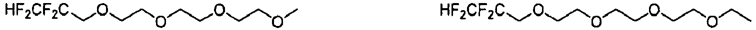

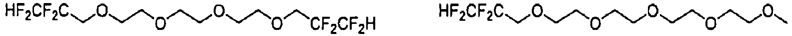

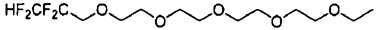

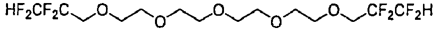

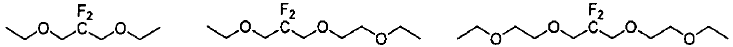

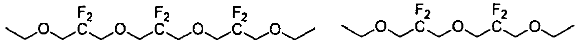

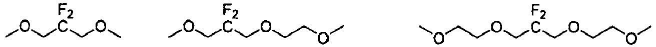

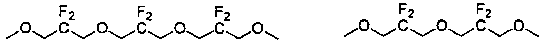

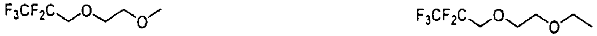

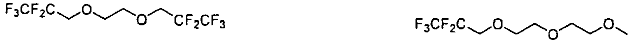

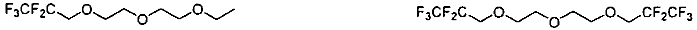

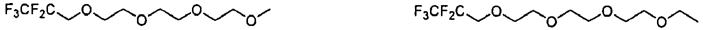

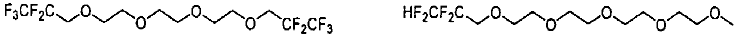

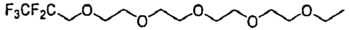

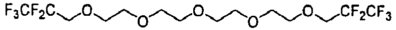

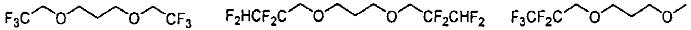

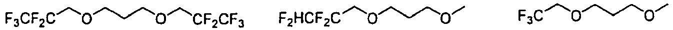

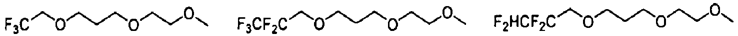

The proportion of the total weight of fluorine atoms to the molecular weight of the compound (3) is preferably from 10 to 60%, more preferably from 15 to 55%. When the proportion of the fluorine atoms is higher, the cycle properties will be more improved. When the proportion of the fluorine atoms is lower, the solubility of the lithium salt will be more improved.

The content of the compound (3) in the non-aqueous electrolyte solution of the present invention is preferably, by mole, from 0.2 to 6.0 times, more preferably from 0.5 to 4.0 times, particularly preferably from 1.0 to 3.0 times the total amount of the lithium salt in the non-aqueous electrolyte solution.

When the amount of the compound (3) is at least 0.2 times the amount of the lithium salt by mole, the lithium salt may easily be dissolved uniformly in the compound (1) and the compound (2). Further, when the amount of the compound (3) is at most 6.0 times the amount of the lithium salt by mole, the cycle properties may easily be improved, and the nonflammability may easily be improved.

### (Carbonate type solvent)

The non-aqueous electrolyte solution of the present invention may contain at least one compound (7) selected from the group consisting of the following compound (7-1), the following compound (7-2) which is a cyclic carbonate, and the following compound (7-3), in addition to the above lithium salt, compound (1), compound (2) and compound (3): 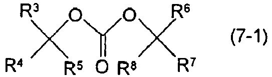 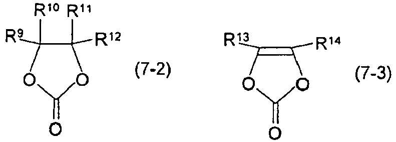 wherein each of R³ to R¹⁴ which are independent of one another, is a hydrogen atom, a halogen atom, an alkyl group or a fluorinated alkyl group.

The compound (7-1) is preferably at least one compound selected from the group consisting of dimethyl carbonate, diethyl carbonate, methyl ethyl carbonate, di-n-propyl carbonate, methyl n-propyl carbonate, ethyl n-propyl carbonate, methyl isopropyl carbonate, ethyl n-propyl carbonate, ethyl isopropyl carbonate, di-n-propyl carbonate, diisopropyl carbonate and 3-fluoropropyl methyl carbonate, particularly preferably dimethyl carbonate, diethyl carbonate or methyl ethyl carbonate, from the viewpoint of availability and physical properties to be provided to the performance of the electrolyte solution, e.g. viscosity.

The compound (7-2) is preferably at least one cyclic carbonate selected from the group consisting of propylene carbonate, ethylene carbonate, butylene carbonate, 4-chloro-1,3-dioxolan-2-one, 4-fluoro-1,3-dioxolan-2-one and 4-trifluoromethyl-1,3-dioxolan-2-one, particularly preferably ethylene carbonate, propylene carbonate or fluoroethylene carbonate, from the viewpoint of availability and the properties of the electrolyte solution.

The compound (7-3) is preferably dimethylvinylene carbonate or vinylene carbonate, particularly preferably vinylene carbonate.

As the compound (7), the compound (7-3) is preferred.

When the compound (7) is added, the solubility of the lithium salt in the compound (1) and the compound (2) will be improved.

Further, when charging is carried out with a secondary battery using a non-aqueous electrolyte solution containing the compound (7), the compound (7) is decomposed on the surface of the negative electrode (e.g. a carbon electrode) to form a stable coating film. The coating film formed by the compound (7) is capable of reducing the resistance at the electrode interface, whereby intercalation of lithium ions to the negative electrode is promoted. That is, the impedance at the negative electrode interface is made small by the coating film formed by the compound (7) in the non-aqueous electrolyte solution, whereby intercalation of lithium ions to the negative electrode is promoted.

The content of the compound (7) in the non-aqueous electrolyte solution is preferably at most 10 vol%, more preferably from 0.01 to 10 vol%, further preferably from 0.1 to 5.0 vol%, particularly preferably from 0.1 to 0.45 vol%, based on the total volume amount of the electrolyte solution with a view to providing nonflammability over a long period of time, suppressing phase separation in the non-aqueous electrolyte solution or generation of a large amount of carbon dioxide gas and accomplishing both suppression of a decrease of the low temperature properties and improvement of the solubility of the lithium salt.

As the dielectric constant becomes high, the compound (7) is more likely to undergo phase separation in the nonaqueous electrolyte, and therefore, its amount is preferably small. Further, if the compound (7) is too much, a large amount of carbon dioxide gas is likely to be formed by its decomposition, and it is considered that it becomes difficult to maintain the nonflammability.

In a case where a chain carbonate of the compound (7-1) is used in combination with a cyclic carbonate of the compound (7-2) and/or the compound (7-3), the ratio (volume ratio of V₁:V₂) of the chain carbonate (volume: V₁) to the cyclic carbonate (volume: V₂) is preferably from 1:10 to 10:1.

### (Other solvents)

The non-aqueous electrolyte solution of the present invention may contain solvents other than the compound (1), the compound (2), the compound (3) and the compound (7), within a range not to let the non-aqueous electrolyte solution undergo phase separation.

Such other solvents may, for example, be a carboxylic acid ester such as an alkyl propionate, a dialkyl malonate or an alkyl acetate, a cyclic ester such as Y-butyrolactone, a cyclic sulfonate such as propanesultone, an alkyl sulfonate and an alkyl phosphate.

The content of such other solvents is preferably at most 10 vol%, more preferably at most 5 vol%, per 100 vol% of the total amount of solvents used in the non-aqueous electrolyte solution.

Further, the non-aqueous electrolyte solution of the present invention may contain a solvent such as a fluorinated alkane for the purpose of suppressing the vapor pressure of the non-aqueous electrolyte solution or for the purpose of further improving the nonflammability of the non-aqueous electrolyte solution, within a range where the lithium salt is soluble in the non-aqueous electrolyte solution. The fluorinated alkane means such a compound that at least one of hydrogen atoms in an alkane is substituted by a fluorine atom and a hydrogen atom remains. In the present invention, a C₄₋₁₂ fluorinated alkane is preferred. Among them, in a case where a fluorinated alkane having at least 6 carbon atoms is employed, an effect to lower the vapor pressure of the non-aqueous electrolyte solution can be expected, and if the number of carbon atoms is at most 12, the solubility of the lithium salt can easily be maintained. Further, the fluorine content in the fluorinated alkane (the fluorine content means the proportion of the total weight of fluorine atoms to the molecular weight) is preferably from 50 to 80%. As the fluorine content in the fluorinated alkane becomes larger, the nonflammability will be higher, and as it becomes smaller, the solubility of the lithium salt will become more excellent.

As such a fluorinated alkane, a compound having a straight chain structure is preferred, and for example, n-C₄F₉CH₂CH₃, n-C₆F₁₃CH₂CH₃, n-C₆F₁₃H or n-C₈F₁₇H may be mentioned. The content of the solvent such as the fluorinated alkane is preferably at most 60 vol% per 100 vol% of the total amount of solvents used in the non-aqueous electrolyte solution in order to maintain the solubility of the lithium salt, and it is preferably at least 5 vol% to lower the vapor pressure or to provide further nonflammability.

Further, the non-aqueous electrolyte solution of the present invention may contain other components as the case requires, in order to improve the functions of the non-aqueous electrolyte solution. Such other components may, for example, be a conventional overcharge-preventing agent, a dehydrating agent, a deoxidizing agent, or a property-improving adjuvant to improve a cycle properties or a volume-maintaining property after storage at a high temperature.

The overcharge-preventing agent may, for example, be an aromatic compound such as biphenyl, an alkylbiphenyl, terphenyl, partially hydrogenated terphenyl, cyclohexyl benzene, t-butylbenzene, t-amylbenzene, diphenyl ether or dibenzofuran; a partially fluorinated product of the above aromatic compound, such as 2-fluorobiphenyl, o-cyclohexylfluorobenzene or p-cyclohexylfluorobenzene; or a fluorinated anisole compound such as 2,4-difluoroanisole, 2,5-difluoroanisole or 2,6-difluoroanisole. Such overcharge-preventing agents may be used alone or in combination as a mixture of two or more of them.

In a case where the non-aqueous electrolyte solution contains an overcharge-preventing agent, the content of the overcharge-preventing agent in the non-aqueous electrolyte solution is preferably from 0.01 to 5 mass%. By incorporating at least 0.1 mass% of the overcharge-preventing agent in the non-aqueous electrolyte solution, it becomes easier to prevent breakage or ignition of a secondary battery by overcharge, and it is possible to use the secondary battery more stably.

The dehydrating agent may, for example, be molecular sieves, salt cake, magnesium sulfate, calcium hydrate, sodium hydrate, potassium hydrate or lithium aluminum hydrate. As the solvent to be used for the non-aqueous electrolyte solution of the present invention, it is preferred to use one subjected to dehydration by the above dehydrating agent, followed by rectification. Otherwise, a solvent subjected to dehydration by the above dehydrating agent without rectification may be used.

The property-improvement adjuvant to improve the cycle properties or the volume-maintaining property after storage at a high temperature, may, for example, be a carbonate compound such as phenylethylene carbonate, erythritan carbonate or spiro-bis-dimethylene carbonate; a carboxylic acid anhydride such as succinic anhydride, glutaric anhydride, maleic anhydride, citraconic anhydride, glutaconic anhydride, itaconic anhydride, diglycolic anhydride, cyclohexanedicarboxylic anhydride, cyclopentanetetracarboxylic dianhydride or phenylsuccinic anhydride; a sulfurcontaining compound such as ethylene sulfite, 1,3-propanesultone, 1,4-butanesultone, methyl methanesulfonate, busulfan, sulfolane, sulfolene, dimethylsulfone, diphenylsulfone, methylphenylsulfone, dibutyldisulfide, dicyclohexyldisulfide, tetramethylthiuram monosulfide, N,N-dimethylmethane sulfonamide or N,N-diethylmethane sulfonamide; a nitrogen-containing compound such as 1-methyl-2-pyrrolidinone, 1-methyl-2-piperidone, 3-methyl-2-oxazolidinone, 1,3-dimethyl-2-imidazolidinone or N-methylsuccinimide; a hydrocarbon compound such as heptane, octane or cycloheptane; or a fluorinated aromatic compound such as fluorobenzene, difluorobenzene, hexafluorobenzene or benzotrifluoride. These property-improving adjuvants may be used alone or in combination as a mixture of two or more of them.

In a case where the non-aqueous electrolyte solution contains a property-improving adjuvant, the content of the property-improving adjuvant in the non-aqueous electrolyte solution is preferably from 0.01 to 5 mass%.

Further, in order to obtain a practically sufficient conductivity, the non-aqueous electrolyte solution of the present invention preferably has a conductivity at 25°C of at least 0.25 S·m⁻¹, more preferably from 0.4 to 2.0 S·m⁻¹. Further, the viscosity (20°C) measured by a rotary viscometer is preferably form 0.1 to 20 cP.

Further, the non-aqueous electrolyte solution of the present invention preferably has a flash point of at least 70°C as measured by a Cleveland open-cup flash point test (in accordance with JIS K2265), and it is particularly preferred that it shows no flash point. Such a flash point of the non-aqueous electrolyte solution can be adjusted by adjusting the types or contents of the compound (1), the compound (2) and the compound (3). For example, when the amount of the total amount of the compound (1) and the compound (2) is at least 20 vol% based on the total amount of solvents, no flash point tends to be shown. However, the types and contents thereof may suitably be changed also in consideration of other performances required as an electrolyte solution.

Further, the non-aqueous electrolyte solution of the present invention is preferably an electrolyte solution having a reduction potential of at most 0.2 V at which the decomposition current value reaches 0.05 mA/cm² and an oxidation potential of at least 4.0 V at which the decomposition current value reaches 0.05 mA/cm². In the present invention, a potential range with the lower limit being the reduction potential at which the decomposition current value reaches 0.05 mA/cm² and the upper limit being the oxidation potential at which the decomposition current value reaches 0.05 mA/cm², is referred to as a potential window. Such a potential window can be accomplished by adjusting the molar ratio (M₃:M_{Li}) of the above compound (3) (molar amount: M₃) to the lithium salt (molar amount: M_{Li}) to be from 0.2:1 to 4:1. The measurement of the potential window can be carried out by the method which will be described in Examples. Here, the molar ratio (M₃:M_{Li}) is preferably from 0.5:1 to 4:1 in a case where each of R^{H1} and R^{H2} in the compound (3H) is a methyl group.

A secondary battery as represented by a lithium secondary battery etc. may be exposed to high temperature by various causes, and when it gets into a high temperature state, oxygen will be released from the crystal lattice of a positive electrode active material, whereby oxygen concentration in the secondary battery will be increased. Thus, it is important that the non-aqueous electrolyte solution of a secondary battery does not ignite even under a high oxygen concentration condition where it is more likely to ignite than in atmospheric composition. That is, it is preferred that the oxygen concentration required for the non-aqueous electrolyte solution to be burnt (limiting oxygen index) is high.

The limiting oxygen index of the non-aqueous electrolyte solution of the present invention is preferably at least 22%, more preferably at least 30%.

The non-aqueous electrolyte solution of the present invention as described above has an excellent compatibility between the hydrofluoroether selected from the group consisting if the compound (1) and the compound (2), and the compound (3) and has a high solubility of the lithium salt, whereby a practically sufficient conductivity may be obtained. Further, it does not require a large amount of a cyclic carbonate and has an excellent nonflammability. Further, the compound (3) in the non-aqueous electrolyte solution of the present invention has electrons withdrawn from the ethereal oxygen atom in its framework by an fluorine atom, and thus HOMO (highest occupied level) of the oxygen atom becomes low, whereby it is excellent also in acid resistance. Therefore, deterioration in charge/discharge cycle of a secondary battery is suppressed, whereby an excellent cycle properties may be obtained.

### [Secondary battery]

A secondary battery using the non-aqueous electrolyte solution of the present invention (hereinafter referred to simply as the secondary battery) is a secondary battery having a negative electrode and a positive electrode, and the non-aqueous electrolyte solution of the present invention.

The negative electrode may be an electrode containing a negative electrode active material which is capable of electrochemically absorbing/desorbing lithium ions. As such a negative electrode active material, a known negative electrode active material for a lithium ion secondary battery can be used, and an artificial or natural graphite (graphite), a carbon material such as amorphous carbon, a metal or metal compound such as metal lithium or a lithium alloy, which is capable of absorbing/desorbing lithium ions, may be mentioned. Such negative electrode active materials may be used alone or in combination as a mixture of two or more of them.

Among them, a carbon material is preferred as the negative electrode active material. Further, as such a carbon material, graphite or a carbon material having the surface of graphite covered with carbon amorphous as compared with the graphite, is particularly preferred.

The graphite preferably has a value d (interlayer distance, hereinafter referred to simply as a value d) of the lattice plane (002 face) being from 0.335 to 0.338 nm, more preferably from 0.335 to 0.337 nm, as obtained by X-ray diffraction by the method of the Japan Society for Promotion of Scientific Research. Further, the crystallite size (Lc) obtained by X-ray diffraction by the method of the Japan Society for Promotion of Scientific Research is preferably at least 30 nm, more preferably at least 50 nm, further preferably at least 100 nm. The ash content in the graphite is preferably at most 1 mass%, more preferably at most 0.5 mass%, further preferably at most 0.1 mass%.

Further, the carbon material having the surface of graphite covered with amorphous carbon is preferably such that graphite having a value d of from 0.335 to 0.338 nm is used as a nucleus, the surface of such graphite is covered with amorphous carbon having a value d larger than the graphite, and the ratio of the nucleus graphite (mass: W_{A}) to the amorphous carbon (mass: W_{B}) covering the graphite is preferably from 80/20 to 99/1 by mass ratio (W_{A}/W_{B}). By using such a carbon material, it becomes easy to produce a negative electrode having a high capacity and being scarcely reactive with the non-aqueous electrolyte solution.

The particle diameter of the carbon material is preferably at least 1 µm, more preferably at least 3 µm, further preferably at least 5 µm, particularly preferably at least 7 µm, by a median diameter by a laser diffraction scattering method. Further, the upper limit of the particle diameter of the carbon material is preferably 100 µm, more preferably 50 µm, further preferably 40 µm, particularly preferably 30 µm.

The specific surface area of the carbon material by BET method is preferably at least 0.3 m²/g, more preferably at least 0.5 m²/g, further preferably at least 0.7 m²/g, particularly preferably at least 0.8 m²/g. The upper limit of the specific surface area of the carbon material is preferably 25.0 m²/g, more preferably 20.0 m²/g, further preferably 15.0 m²/g, particular preferably 10.0 m²/g.

The carbon material preferably has a value R (=I_{B}/I_{A}) of from 0.01 to 0.7, which is represented by a ratio of the peak intensity I_{B} of peak P_{B} within a range of from 1,300 to 1,400 cm⁻¹ to the peak intensity I_{A} of peak P_{A} within a range of from 1,570 to 1,620 cm⁻¹, as analyzed by a Raman spectrum using an argon ion laser beam. Further, the half value width of the peak P_{A} is preferably at most 26 cm⁻¹, particularly preferably at most 25 cm⁻¹.

A metal which can be used as a negative electrode active material other than metal lithium may, for example, be Ag, Zn, Al, Ga, In, Si, Ti, Ge, Sn, Pb, P, Sb, Bi, Cu, Ni, Sr or Ba. Further, as a lithium alloy, an alloy of lithium with such a metal may be mentioned. Further, as a metal compound, an oxide of such a metal may, for example, be mentioned.

Among them, at least one metal selected from the group consisting of Si, Sn, Ge, Ti and Al, or a metal compound, metal oxide or lithium alloy containing such a metal, is preferred, and more preferred is at least one metal selected from the group consisting of Si, Sn and Al, or a metal compound, lithium alloy or lithium titanate containing such a metal.

A metal capable of absorbing/desorbing lithium ions, a metal compound containing such a metal or a lithium alloy usually has a large capacity per unit mass as compared with a carbon material as represented by graphite and thus is suitable for a secondary battery which is required to have a higher energy density.

The positive electrode may, for example, be an electrode containing a positive electrode active material which is capable of electrochemically absorbing/desorbing lithium ions.

As such a positive electrode active material, a known positive electrode active material for a lithium ion secondary battery may be used, and, for example, a lithium-containing transition metal oxide such as lithium cobalt oxide, lithium nickel oxide or lithium manganese oxide, a lithium-containing transition metal composite oxide using at least one transition metal, a transition metal oxide, a transition metal sulfide, a metal oxide or an olivine type metal lithium salt may, for example, be mentioned.

As a transition metal for the lithium-containing transition metal composite oxide, V, Ti, Cr, Mn, Fe, Co, Ni or Cu is, for example, preferred. For example, a lithium cobalt composite oxide such as LiCoO₂, a lithium nickel composite oxide such as LiNiO₂, a lithium manganese composite oxide such as LiMnO₂, LiMn₂O₄ or LiMnO₃, or one having a part of the transition metal atom which mainly constitutes such a lithium transition metal composite oxide substituted by another metal such as Al, Ti, V, Cr, Mn, Fe, Co, Li, Ni, Cu, Zn, Mg, Ga, Zr, Si or Yb, may, for example, be mentioned. One having substituted by another metal may, for example, be LiMn₀.₅Ni₀.₅O₂, LiMn₁.₈Al₀.₂O₄, LiNi₀.₈₅CO₀.₁₀Al₀.₀₅O₂, LiMn₁.₅N₀.₅O₄, LiNi_{1/3}C_{1/3}Mn_{1/3}O₂ or LiMn₁.₈Al₀.₂O₄.

The transition metal oxide may, for example, be TiO₂, MnO₂, MoO₃, V₂O₅ or V₆O₁₃, and the transition metal sulfide may, for example, be TiS₂, FeS or MoS₂. The metal oxide may, for example, be SnO₂ or SiO₂.

The olivine type metal lithium salt is a substance represented by the formula Li_{L}XₓY_{y}O_{z}F_{g} (wherein X is Fe(II), Co(II), Mn(II), Ni(II), V(II) or Cu(II), Y is P or Si, O≦L≦3, 1≦x≦2, 1≦y≦3, 4≦z≦12, 0≦g≦1) or a composite thereof. For example, LiFePO₄, Li₃Fe₂(PO₄)₃, LiFeP₂O₇, LiMnPO₄, LiNiPO₄, LiCoPO₄, Li₂FePO₄F, Li₂MnPO₄F, Li₂NiPO₄F, Li₂CoPO₄F, Li₂FeSiO₄, Li₂MnSiO₄, Li₂NiSiO₄ or Li₂CoSiO₄ may be mentioned.

These positive electrode active materials may be used alone or in combination as a mixture of two or more of them.

Further, such a positive electrode active material having on its surface attached substance having a composition different from the substance constituting the positive electrode active material as the main component may also be used. The surface-attached substance may, for example, be an oxide such as aluminum oxide, silicon oxide, titanium oxide, zirconium oxide, magnesium oxide, calcium oxide, boron oxide, antimony oxide or bismuth oxide; a sulfate such as lithium sulfate, sodium sulfate, potassium sulfate, magnesium sulfate, calcium sulfate or aluminum sulfate; or a carbonate such as lithium carbonate, calcium carbonate or magnesium carbonate.

With regard to the amount of the surface-attached substance, the lower limit of the mass based on the positive electrode active material is preferably 0.1 mass ppm, more preferably 1 mass ppm, further preferably 10 mass ppm. The upper limit is preferably 20 mass%, more preferably 10 mass%, further preferably 5 mass%. By the surface-attached substance, it is possible to suppress an oxidation reaction of the non-aqueous electrolyte solution at the surface of the positive electrode active material and thereby to improve the battery life.

The positive electrode active material is preferably a lithium-containing composite oxide having an α-NaCrO₂ structure as matrix, such as LiCoO₂, LiNiO₂ or LiMnO₂, or a lithium-containing composite oxide having a spinel structure as matrix, such as LiMn₂O₄, since its discharge voltage is high and its electrochemical stability is high.

The secondary battery of the present invention has a negative electrode and a positive electrode, and the non-aqueous electrolyte solution of the present invention, wherein either one of the negative electrode and the positive electrode is a polarizable electrode and the other is a nonpolarizable electrode, or both of them are polarizable electrodes or nonpolarizable electrodes. The polarizable electrode is preferably one composed mainly of an electrochemically inactive material having a high specific surface area, and it is particularly preferably one made of activated carbon, carbon black, fine particles of a metal or fine particles of a conductive oxide. Among them, preferred is one having an electrode layer made of a carbon material powder having a high specific surface area such as activated carbon formed on the surface of a metal current collector.

For the preparation of an electrode, a binder to bind the negative electrode active material or the positive electrode active material is used.

As such a binder to bind the negative electrode active material or the positive electrode active material, an optional binder may be used so long as it is a material stable against the electrolyte solution and the solvent to be used at the time of preparing the electrodes. The binder may, for example, be a fluororesin such as polyvinylidene fluoride or polytetrafluoroethylene, a polyolefin such as polyethylene or polypropylene, a polymer or copolymer having unsaturated bonds such as a styrene/butadiene rubber, isoprene rubber or butadiene rubber, or an acrylic acid type polymer or copolymer such as an acrylic acid copolymer or a methacrylic acid copolymer. One of these binders may be used alone, or two or more of them may be used in combination.

In order to increase the mechanical strength and electrical conductivity, a thickener, an electrically conductive material, a filler or the like may be incorporated in the electrode.

The thickener may, for example, be carboxymethylcellulose, methylcellulose, hydroxymethylcellulose, ethylcellulose, polyvinyl alcohol, oxidized starch, phosphorylated starch, casein or polyvinylpyrrolidone. One of these thickeners may be used alone, or two or more of them may be used in combination.

The electrically conductive material may, for example, be a metal material such as copper or nickel, or a carbon material such as graphite or carbon black. One of these electrically conductive materials may be used alone, or two or more of them may be used in combination.

An electrode can be prepared by adding a binder, a thickener, an electrically conductive material, a solvent, etc. to a negative electrode active material or a positive electrode active material, to form a slurry, which is then applied to a current collector, followed by drying. In such a case, the electrode is preferably pressed and densified by pressing after the drying.

If the density of the positive electrode active material layer is too low, the capacity of the secondary battery is likely to be inadequate.

As the current collector, various types of current collector may be used. However, usually a metal or an alloy is employed. As a current collector for a negative electrode, copper, nickel, stainless steel or the like may be mentioned, and copper is preferred. Whereas, as a current collector for a positive electrode, a metal such as aluminum, titanium or tantalum, or its alloy may be mentioned, and aluminum or its alloy is preferred, and aluminum is particularly preferred.

The shape of the secondary battery may be selected depending upon the particular application, and it may be a coin-form, a cylindrical form, a square form or a laminate form. Further, the shapes of the positive electrode and the negative electrode may also be suitably selected to meet with the shape of the secondary battery.

The charging voltage of the secondary battery of the present invention is preferably at least 3.4 V, more preferably at least 4.0 V, further preferably at least 4.2 V. In a case where the positive electrode active material of the secondary battery is a lithium-containing transition metal oxide, a lithium-containing transition metal composite oxide, a transition metal oxide, a transition metal sulfide or a metal oxide, the charging voltage is preferably at least 4.0 V, more preferably at least 4.2 V. Further, in a case where the positive electrode active material is an olivine type metal lithium salt, the charging voltage is preferably at least 3.2 V, more preferably at least 3.4 V. The non-aqueous electrolyte solution of the present invention has oxidation resistance of at least 4.2 V and reduction resistance of at most 0.2 V, and thus the non-aqueous electrolyte solution of the present invention may be used for any electrodes having an operating potential within such a range.

Further, the secondary battery of the present invention is particularly preferably a secondary battery which is used at a charging voltage set to be at least 4.2 V (the potential based on lithium metal). For example, it may be a secondary battery having the non-aqueous electrolyte solution of the present invention which has a potential window wider than the range of from 0 V to 4.2 V.

Between the positive electrode and the negative electrode of the secondary battery, a porous film is usually interposed as a separator in order to prevent short circuiting. In such a case, the non-aqueous electrolyte solution with which the porous film is impregnated is used. The material and the shape of the porous film are not particularly limited so long as it is stable against the non-aqueous electrolyte solution and is excellent in the liquid-maintaining property. The porous film is preferably a porous sheet or a nonwoven fabric made of a fluororesin such as polyvinylidene fluoride, polytetrafluoroethylene or a copolymer of ethylene and tetrafluoroethylene, or a polyolefin such as polyethylene or polypropylene, and as the material, a polyolefin such as polyethylene or polypropylene is preferred. Further, such a porous film impregnated with the electrolyte solution and gelated may be used as a gel electrolyte.

The material for a battery exterior package to be used for the non-aqueous electrolyte solution of the present invention may also be a material which is commonly used for secondary batteries, and nickel-plated iron, stainless steel, aluminum or its alloy, nickel, titanium, a resin material, or a film material may, for example, be mentioned.

The secondary battery of the present invention employs the above-described non-aqueous electrolyte solution, whereby it is free from ignition and excellent in nonflammability even if an excessive load such as excessive heat, excessive charging, internal short circuiting or external short circuiting, may be exerted to the secondary battery. Accordingly, it is not required to provide a complicated monitoring system in the secondary battery to monitor the above-described excessive load. Further, the non-aqueous electrolyte solution for secondary batteries of the present invention employs the non-aqueous electrolyte solution of the present invention, whereby it has excellent cycle properties.

Thus, the secondary battery of the present invention may be used for various applications to, for example, mobile phones, portable game devices, digital cameras, digital video cameras, electric tools, notebook computers, portable information terminals, portable music players, electric vehicles, hybrid cars, electric trains, aircrafts, satellites, submarines, ships, uninterruptible power supply systems, robots and electric power storage systems. Further, the secondary battery of the present invention is very stable and thus has particularly preferred characteristics as a large size secondary battery for e.g. electric vehicles, hybrid cars, electric trains, aircrafts, satellites, submarines, ships, uninterruptible power supply systems, robots and electric power storage systems.

Further, since the non-aqueous electrolyte solution of the present invention is capable of having an lithium salt well dissolved and is excellent in compatibility of the solvents and nonflammability and also in cycle properties, it may be used for charging devices other than secondary batteries. Such another charging device may, for example, be an electric double-layer capacitor or a lithium-ion capacitor.

### EXAMPLES

Now, the present invention will be described in detail with reference to Working Examples and Comparative Examples. However, it should be understood that the present invention is by no means restricted to these Examples. Examples 1 to 5 and 10 are Working Examples of the present invention, and Examples 6 to 9, 11 and 12 are Comparative Examples.

### [Example 1]

Diethylene glycol (2,2,2-trifluoroethyl)methyl ether (4.04 g, 20.0 mmol) as a compound (3) and LiPF₆ (1.51 g, 10.0 mmol) were mixed, and then HFE347pc-f (CF₃CH₂OCF₂CF₂H, 14.7 g, 10.0 mL) as a compound (2) was added thereto and mixed to prepare non-aqueous electrolyte solution 1.

### [Example 2]

Non-aqueous electrolyte solution 2 was prepared in the same manner as in Example 1 except that LiClO₄ (1.06 g, 10.0 mmol) was used instead of LiPF₆.

### [Example 3]

Non-aqueous electrolyte solution 3 was prepared in the same manner as in Example 1 except that the following compound (4-2) (CTFSI-Li, 2.49 g, 10.0 mmol) was used instead of LiPF₆.

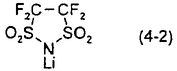

### [Example 4]

Non-aqueous electrolyte solution 4 was prepared in the same manner as in Example 1 except that the following compound (1-1) (14.5 g, 10.0 mL) was used instead of the above HFE347pc-f.

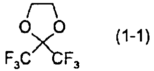

### [Example 5]

Non-aqueous electrolyte solution 5 was prepared in the same manner as in Example 1 except that HFE458pcf-c (CHF₂CF₂CH₂OCF₂CF₂H, 15.3 g, 10.0 mL) was used as a compound (2) instead of HFE347pc-f.

### [Example 6]

Diethylene glycol dimethyl ether (2.68 g, 20.0 mmol) and LiPF₆ (1.51 g, 10.0 mmol) were mixed, and then HFE347pc-f (14.7 g, 10.0 mL) as a compound (2) was added thereto and mixed to prepare non-aqueous electrolyte solution 6.

### [Example 7]

To a mixed solvent (10.0 mL, mix volume ratio: 1/1) of ethylene carbonate and ethyl methyl carbonate, LiPF₆ (1.51 g, 10.0 mmol) was added and mixed to prepare non-aqueous electrolyte solution 7.

### [Example 8]

To a solvent comprising HFE347pc-f (3.0 mL) as a compound (2) and a mixed solvent (7.0 mL, mix volume ratio: 1/1) of ethylene carbonate and ethyl methyl carbonate, LiPF₆ (1.51 g, 10.0 mmol) was added and mixed to prepare non-aqueous electrolyte solution 8.

### [Example 9]

Non-aqueous electrolyte solution 9 was prepared in the same manner as in Example 1 except that CF₃CF₂CF₃CF₃CF₃CF₃0CH₃ (16.6 g, 10.0 mL) was used instead of the above HFE347pc-f.

### [Evaluation methods]

Compatibility of respective solvent components in the non-aqueous electrolyte solutions obtained in Example 1 to 9 was evaluated. Further, with regard to non-aqueous electrolyte solutions obtained in Examples 1 to 3 and Examples 6 to 8, the limiting oxygen index test as described below was carried out to evaluate the nonflammability.

### (Compatibility)

The state of dissolution of the non-aqueous electrolyte solution after expiration of 1 hour from the preparation of the non-aqueous electrolyte solution in each of Examples 1 to 9, was visually evaluated. In the evaluation, a state such that the electrolyte solution was uniform was identified by "O", and a state such that the electrolyte solution underwent phase separation into two phases was identified by "x".

### (Nonflammability)

By means of a limiting oxygen index measurement apparatus provided with a support, a glass pan having 3 mL of a sample (non-aqueous electrolyte solution) therein was placed on the support, and a glass cylinder was applied so that it covered the glass pan. From the bottom part of the glass cylinder, an oxygen/nitrogen mixed gas having an oxygen concentration adjusted to be sufficient to burn the sample was flowed, and the sample was held for 30 seconds after ignition, followed by adjustment of the oxygen concentration to be a prescribed value. The burning time was measured from expiration of 30 seconds where the sample was held after the oxygen concentration was adjusted to be the prescribed value. One continued to burn for at least 180 seconds was identified by "burnt", and the case where the flame went out in less than 180 seconds was identified by "nonflammable", and the lowest oxygen concentration which is required to continuously burn the sample for at least 180 seconds was determined. Such measurement of the lowest oxygen concentration was carried out 3 times, and the average value was taken as "limiting oxygen index (unit: %)". As the nonflammability of a non-aqueous electrolyte solution used for secondary batteries, when the limiting oxygen index is at least 22%, it may be evaluated as being sufficient.

The evaluation results of compatibility and nonflammability are shown in Table 1.

**[Table 1]**

| | Non-aqueous electrolyte solution | Compatibility | Limiting oxygen index [%] |
|---|---|---|---|
| Ex. 1 | Non-aqueous electrolyte solution 1 | ○ | >70 |
| Ex. 2 | Non-aqueous electrolyte solution 2 | ○ | >70 |
| Ex. 3 | Non-aqueous electrolyte solution 3 | ○ | >70 |
| Ex. 4 | Non-aqueous electrolyte solution 4 | ○ | - |
| Ex. 5 | Non-aqueous electrolyte solution 5 | ○ | - |
| Ex. 6 | Non-aqueous electrolyte solution 6 | ○ | >70 |
| Ex. 7 | Non-aqueous electrolyte solution 7 | ○ | >20 |
| Ex. 8 | Non-aqueous electrolyte solution 8 | ○ | >20 |
| Ex. 9 | Non-aqueous electrolyte solution 9 | × | - |

As shown in Table 1, electrolyte solutions of Examples 1 to 5, which are the non-aqueous electrolyte solutions of the present invention, had excellent compatibility. Further, as found from the results of Examples 1 to 3, the non-aqueous electrolyte solutions of the present invention had a high limiting oxygen index and excellent nonflammability.

On the other hand, in Example 9 wherein a monoether having a fluorinated alkyl group and an alkyl group was used instead of the compound (2) in the non-aqueous electrolyte solution of the present invention, the electrolyte solution completely underwent phase separation into two phases, and it could not be used as a non-aqueous electrolyte solution.

Further, the non-aqueous electrolyte solution of Example 6, wherein diethylene glycol dimethyl ether was used instead of the compound (3), had excellent nonflammability. However, the non-aqueous electrolyte solution of Example 7 only of carbonate type compounds and the non-aqueous electrolyte solution of Example 8 wherein the compound (3) was absent were easily burnt even in atmospheric composition, and they were inferior in nonflammability.

### <Evaluation of sheet-form non-aqueous electrolyte solution secondary battery with single-pole cell comprising LiCoO₂ positive electrode-lithium metal foil>

### [Example 10]

90 Parts by mass of LiCoO₂ (tradename: "Selion C", manufactured by AGC Seimi Chemical Co., Ltd.), 5 parts by mass of carbon black (tradename: "DENKABLACK", manufactured by Denki Kagaku Kogyo Kabushiki Kaisha) and 5 parts by mass of polyvinylidene fluoride were mixed, and N-methyl-2-pyrrolidone was added to obtain a slurry. The slurry was applied uniformly on one side of a 20-µm-thick aluminum foil, followed by drying and then by pressing so that the density of the positive electrode active material layer would be 3.0 g/cm³, thereby to obtain a LiCoO₂ positive electrode.

The LiCoO₂ positive electrode, a lithium metal foil having the same area as the LiCoO₂ positive electrode, and a separator made of polyethylene, were laminated in a 2016 type coin cell in the order of the lithium metal foil, the separator and the LiCoO₂ positive electrode, to prepare a battery element, and the non-aqueous electrolyte solution 2 prepared in Example 2 was added, followed by sealing to prepare a coin-type non-aqueous electrolyte solution secondary battery.

### [Example 11]

A coin-type secondary battery was prepared in the same manner as in Example 10 except that the non-aqueous electrolyte solution 6 prepared in Example 6 was used.

### [Example 12]

A coin-type secondary battery was prepared in the same manner as in Example 10 except that the non-aqueous electrolyte solution 7 prepared in Example 7 was used.

### [Evaluation method]

Evaluation of the cycle properties of the coin-type secondary battery with a single-pole cell comprising LiCoO₂ positive electrode-lithium metal foil, was carried out by the following method.

At 25°C, a cycle of charging to 4.3 V (the voltage represents a voltage based on lithium) with constant current corresponding to 0.1 C and discharging to 3 V with constant current corresponding to 0.1 C, was repeated for 2 cycles. Further, a cycle of charging to 4.3 V with constant current corresponding to 0.2 C and discharging to 3 V with constant current corresponding to 0.2 C, was repeated for 2 cycles, to stabilize the secondary battery. In the 5th and subsequent cycles, a cycle of charging to 4.3 V with constant current of 0.2 C and further charging at the charging upper limit voltage until the current value became 0.02 C and thereafter discharging to 3 V at constant current of 0.2 C, was repeated, whereupon the maintenance ratio of the discharge capacity in the 50th cycle to the discharge capacity in the fifth cycle was taken as the evaluation result. Here, 1 C represents a current value for discharging a standard capacity of a battery in one hour, and 0.2 C represents a current value corresponding to 1/5 thereof.

The evaluation results are shown in Table 2.

**[Table 2]**

| | Non-aqueous electrolyte solution | Maintenance ratio of discharge capacity [%] |
|---|---|---|
| Ex. 10 | Non-aqueous electrolyte solution 2 | 93 |
| Ex. 11 | Non-aqueous electrolyte solution 6 | 78 |
| Ex. 12 | Non-aqueous electrolyte solution 7 | 92 |

As shown in Table 2, the secondary battery of Example 10 employing the non-aqueous electrolyte solution of the present invention exhibited good cycle properties even during charging/discharging at 4.3 V.

On the other hand, with regard to the secondary battery of Example 11 having the non-aqueous electrolyte solution 6 using diethylene glycol dimethyl ether instead of the compound (3), the cycle properties was insufficient. This is considered because the oxidation resistance of diethylene glycol dimethyl ether was insufficient.

Further, the secondary battery of Example 12 employing the non-aqueous electrolyte solution 7 containing only carbonate type compounds as the solvent had good cycle properties. However, the non-aqueous electrolyte solution 7 is, as shown in the above Example 7, inferior in nonflammability, and thus it is not suitable as a non-aqueous electrolyte solution for secondary batteries.

### INDUSTRIAL APPLICABILITY

The electrolyte solution of the present invention is useful as a non-aqueous electrolyte solution for secondary batteries.

The entire disclosure of Japanese Patent Application No. 2009-246969 filed on October 27, 2009 including specification, claims and summary is incorporated herein by reference in its entirety.

## Claims

1. A non-aqueous electrolyte solution for secondary batteries, which comprises a lithium salt, at least one hydrofluoroether selected from the group consisting of a compound represented by the following formula (1) and a compound represented by the following formula (2), and at least one compound (3) which is a compound represented by the following formula (3H) wherein at least one hydrogen atom is substituted by a fluorine atom: 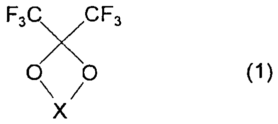
R¹-O-R² (2) 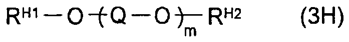
wherein each of R¹ and R² which are independent of each other, is a C₁₋₁₀ alkyl group or a partially fluorinated C₁₋₁₀ alkyl group, provided that at least one of R¹ and R² is a partially fluorinated alkyl group; X is a C₁₋₅ alkylene group, a partially fluorinated C₁₋₅ alkylene group, a C₁₋₅ alkylene group having an ethereal oxygen atom between carbon-carbon atoms, or a partially fluorinated C₁₋₅ alkylene group having an ethereal oxygen atom between carbon-carbon atoms; m is an integer of from 1 to 10; Q is a C₁₋₄ linear alkylene group, a C₁₋₄ linear alkylene group having at least one hydrogen atom substituted by a C₁₋₅ alkyl group, or a C₁₋₄ alkylene group having at least one hydrogen atom substituted by a C₁₋₅ alkylene group having an ethereal oxygen atom between carbon-carbon atoms, provided that when m is 2 or more, m Qs may be the same groups or groups different from one another; and each of R^{H1} and R^{H2} which are independent of each other, is a C₁₋₅ linear alkyl group, or R^{H1} and R^{H2} are linked to each other to form a C₁₋₁₀ linear alkylene group.

2. The non-aqueous electrolyte solution for secondary batteries according to Claim 1, wherein the hydrofluoroether is at least one member selected from the group consisting of a compound represented by the following formula (1-1), CF₃CH₂OCF₂CF₂H, CHF₂CF₂CH₂OCF₂CF₂H, CF₃CF₂CH₂OCF₂CHF₂ and CF₃CH₂OCF₂CHFCF₃:

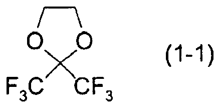

3. The non-aqueous electrolyte solution for secondary batteries according to Claim 1 or 2, wherein the lithium salt is at least one member selected from the group consisting of LiPF₆, a compound represented by the following formula (4), FSO₂N(Li)SO₂F, CF₃SO₂N(Li)SO₂CF₃, CF₃CF₂SO₂N(Li)SO₂CF₂CF₃, LiClO₄, a compound represented by the following formula (5), a compound represented by the following formula (6) and LiBF₄: 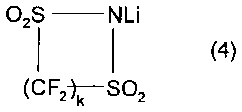 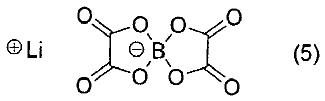 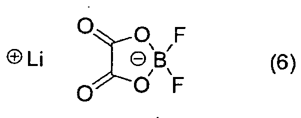 wherein k is an integer of from 1 to 5.

4. The non-aqueous electrolyte solution for secondary batteries according to Claim 3, wherein the compound represented by the formula (4) is a compound wherein in the formula (4), k is 2.

5. The non-aqueous electrolyte solution for secondary batteries according to any one of Claims 1 to 4, wherein Q in the compound represented by the formula (3H) is -CH₂CH₂-, and at least one of R^{H1} and R^{H2} is CH₃CH₂- or CH₃CH₂CH₂-.

6. The non-aqueous electrolyte solution for secondary batteries according to any one of Claims 1 to 5, wherein m in the compound represented by the formula (3H) is from 1 to 6.

7. The non-aqueous electrolyte solution for secondary batteries according to any one of Claims 1 to 6, wherein the content of the compound (3) is, by mole, from 0.2 to 6.0 times the total amount of the lithium salt.

8. The non-aqueous electrolyte solution for secondary batteries according to any one of Claims 1 to 7, which contains a carbonate type solvent.

9. The non-aqueous electrolyte solution for secondary batteries according to Claim 8, wherein the carbonate type solvent is at least one compound selected from the group consisting of a compound represented by the following formula (7-1), a compound represented by the following formula (7-2) and a compound represented by the following formula (7-3): 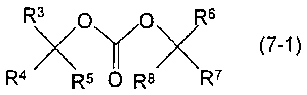 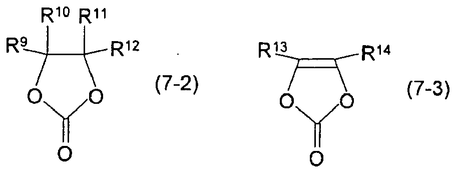 wherein each of R³ to R¹⁴ which are independent of one another, is a hydrogen atom, a halogen atom, an alkyl group or a fluorinated alkyl group.

10. The non-aqueous electrolyte solution for secondary batteries according to Claim 8 or 9, wherein the content of the carbonate type solvent is from 0.1 to 0.45 vol% based on the total amount 100 vol% of solvents in the electrolyte solution.

11. The non-aqueous electrolyte solution for secondary batteries according to any one of Claims 1 to 10, which has a conductivity of at least 0.20 S·m⁻¹ at 25°C.

12. A secondary battery comprising a negative electrode composed of a material capable of electrochemically absorbing/desorbing lithium ions, and metal lithium or a lithium alloy; a positive electrode composed of a material capable of electrochemically absorbing/desorbing lithium ions; and the non-aqueous electrolyte solution for secondary batteries as defined in any one of Claims 1 to 11.

13. The secondary battery according to Claim 12, which is used with a potential of the positive electrode (a potential based on lithium metal) of at least 3.4 V.
